# EUROPEAN PATENT APPLICATION

(11) **EP 1 093 060 A2**
(43) Date of publication of application: **18.04.2001**
(21) Application number: 00308792.1
(22) Date of filing: 05.10.2000
(51) Int. Cl.: G06F 17/30

(54) **SQL interface for business application software**

(30) Priority: 14.10.1999 US 418278
(71) Applicant: Dharma Systems, Inc., Nashua, New Hampshire 03063 (US)
(72) Inventor: Sasidhar, Jonnalagadda, Hollis, NH 03044 (US); Budithi, Damodara Rao, San Mateo, CA94402 (US)
(74) Representative: Watts, Peter Graham

(57) **Abstract**

A business application SQL interface and process for mapping at least one SQL statement to at least one business transaction incorporated within business application software. The SQL interface and process both have a mechanism for inheriting meta information associated with the business transaction including the transaction name. The SQL interface and process both further have a mechanism for inputting tables and columns referring to the desired business transaction(s) incorporated within business application software. The SQL interface and process both generate mapping rules associating the inputted tables and columns with the business transactions. Finally, an external application inputs a desired SQL statement that refers to the business application software, and the inputted SQL statement, upon execution, invokes execution of the necessary business transactions to retrieve, alter, modify, update, etc. the desired data or other information managed by the business application software.

## Description

### Field of the Invention

The present invention provides a Structured Query Language (SQL) interface for use with business application software to provide a simple and standardized interface for retrieving, inserting, deleting and/or modifying data, managed by the business application software, by utilizing the business rules incorporated within the business application software.

### Background of the Invention

SQL is a standardized language that is commonly used to access and process data stored in a database. The SQL language utilizes four basic commands that specify what data is to be accessed and how the data, if at all, is to be processed or utilized. The four basic commands employed by SQL language are "insert", "delete", "update" and "select".

In the prior art, a variety of different SQL interfaces have been developed for use with various types of databases including relational environments, hierarchical environments, and navigational environments. One such arrangement is disclosed in United States Patent No. 5,761,496, issued to Smedley, which relates to a process for providing a SQL interface to access an IMS (Information Management System which is a database environment) transaction based computer system. While all SQL interfaces heretofore employed have an interface which communicates directly with a database, none of the known systems provide a SQL interface which communicates directly with the business application software to access the information, managed by the business application software, via execution of the business transactions incorporated within the business application software.

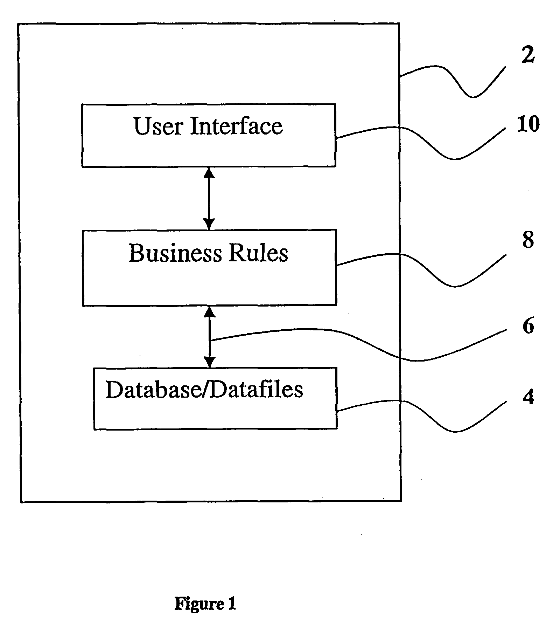

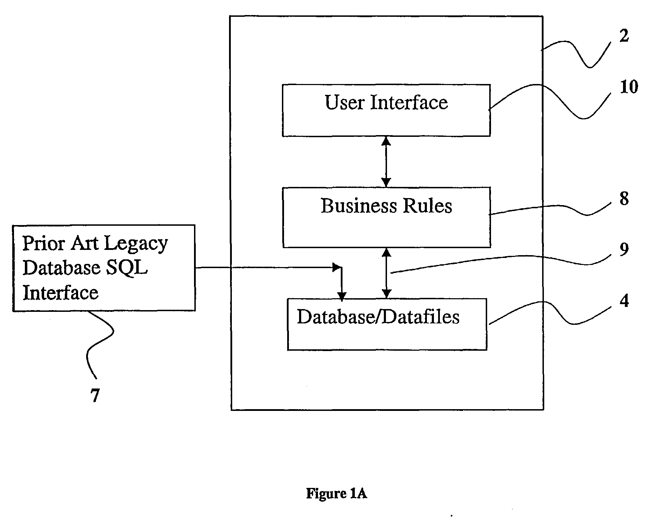

With reference to Fig. 1, a brief description concerning a general current arrangement of a prior art SQL interface will now be described. As can be seen in this Figure, the business application software 2 generally comprises a database 4 in which all the desired data, information, tables, etc., concerning the business application software, is stored and is readily retrievable by the business application software 2. Overlying the database 4 is a layer of business logic rules 8 which are coupled to database 4 via a conventional SQL interface 6. Overlaying the business logic rules 8 is a user interface 10 which comprises a plurality of forms, screens, other displays which facilitate an end user inputting a desired command, query, request, instruction, etc., to the business application software 2. The business application software 2 is then able, utilizing the business logic rules 8, to retrieve, insert, delete, modify or perform some other desired transaction with respect to the data or other information stored in the database 4. The transaction to be performed will depend upon the business application software 2 and, as the business application software per se forms no part of the present invention, a further detail discussion concerning the same is not provided.

As will be appreciated from the above brief description of the prior art SQL interface, the SQL interface is provided only between the business logic rules 8 and the database 4 so that the query can only be entered directly to the database 4 to accomplish a desired command, result, request, instruction, retrieval, etc. One of the disadvantages with such arrangement is that the prior art SQL interface can only obtain the requested data or other information directly from the database 4 in a database format. As such, it is not possible to inherit any conversion or alteration, of the actually stored data or other information, which is already incorporated in the business logic rules of the application software, e.g. a conversion of a yen figure, actually stored in the database 4, to a U.S. dollars figure which is automatically accomplished by the business logic rules during operation of the business application software 2. Alternatively, there could be countless other conversion(s), translation(s), alteration(s), modification(s), etc., of the data or other information stored in the database 4, prior to the same being output to the end user. Depending upon how the business application software operates, it is often difficult to interpret the meaning of the data or other information retrieved directly from the database 4 and modify or utilize that retrieved data or other information unless the end user is fairly familiar with business application software 2 and knows how to transform the data in the same way that the business logic rules of the business application software 2 transforms such data or other information.

With reference to Fig. 1A, a brief description concerning a prior art arrangement for providing a database SQL interface to a legacy business application will now be described. As this arrangement is very similar to that of Fig. 1, and only two major differences between the two arrangements will be discussed. As seen in this Figure, overlying the database 4 is a layer of business logic rules 8 which are coupled to database 4 via a proprietary database interface 9. An auxiliary external prior art SQL interface 7 is also coupled to the legacy database 4, along with the proprietary database interface 9, to facilitate the external access of data by an end user.

### Summary of the Invention

Wherefore, it is an object of the present invention to overcome the above noted drawbacks associated with the prior art SQL interfaces.

A further object of the present invention is to layer the present invention over a business application software so that the application specific business rules, of the business application software, are utilized when accessing the data or other information stored in the underlying database or data files, rather than by direct access to the database, as with the prior art SQL interfaces. As a result of the present invention, the SQL statements normally utilize the business rules of the business application software to access and process the data or other information. Thus, the business application SQL interface, of the present invention, does not directly access the data stored in the database or data files used by the application for storing data. The integrity of the business application is, therefore, maintained as is the integrity of the data or other information.

A further object of the invention is to provide a business application SQL interface in which the SQL statement can refer to a desired object, such as a table, a column, etc., and facilitates mapping of the SQL statement to the specific business rules or transactions incorporated into the business application software. By utilizing the business transactions or rules, which are part of the business application software, the system is able to make sense of the previously stored data or other information managed by the business application software.

A still further object of the invention is to provide a software interface which allows a software developer to use standard SQL tools for retrieving, modifying, updating, inserting, storing, etc., information or other data contained within a business application software without requiring the software developer to prepare custom software for the specific application programmatic interfaces. Such simplification minimizes the amount of knowledge or information, of the actual business application software, which is required of the software developer in order to facilitate retrieving, modifying, updating, inserting, storing, etc., of the data or other information contained within the business application software.

Yet another object of the invention is to allow integration of multiple business applications, either within or outside a desired business organization, via a common business application SQL interface.

Still another object of the present invention is to enable unified viewing of an entire business organization having multiple business applications, that provide different business functions, operating within the business organization.

A further object of the present invention is to enable easy integration of the business transactions or rules and data of the business application software into other computer software such that virtually any software tool, that can generate a desired SQL statement, can be integrated with the business application software and utilize the existing business transactions or rules to access data or other information stored within the business application software.

The present invention relates to a business application SQL interface for use with at least one business transaction of a business application software, the business application SQL interface comprising: a meta information loader for loading information relating to business transactions of a business application software; means for defining tables and columns for use by an external application in referring to the business application software; means for generating mapping rules associating the tables and the columns with at least one of the business transactions of the business application software; means for accepting an inputted SQL statement referring to the defined tables and the columns; and means for executing the inputted SQL statement by execution of at least one of the business transactions of the business application software.

The present invention also relates to a process for mapping an inputted SQL statement to at least one business transaction incorporated within business application software, the process comprising the steps: loading meta information relating to business transactions of a business application software; defining tables and columns for use by an external application in referring to the business application software; generating mapping rules associating the defined tables and the columns with at least one of the business transactions of the business application software; inputting a SQL statement that refers to the defined tables and the columns; and executing the inputted SQL statement by execution of at least one of the business transactions of the business application software.

The term "business application software", as used herein, refers to any kind of software application that stores data or other information relating to a business and also incorporates business rules which are utilized in retrieving, utilizing, and/or modifying the business data. Conventionally, access to the business application is provided via business transactions that are available through screens displayed on a computer monitor or other display, application programmatic interfaces (API), object interfaces, message interfaces or Extended Markup Language (XML) requests. Execution of the SQL statement either returns data and/or modifies the stored data or other information that is maintained by the business application. It is to be appreciated that the SQL statement can be very general (including any SQL operations such as, for example, joins, restricts, unions, intersects, project, order by, group by, and sub queries), whereas the business transactions are very specific in their ability to accomplish desired results of the end user.

The terms "business transaction" and "business transactions", as used herein, refer to the external interface of the business rules or the business logic rules implemented by the business application software for accomplishing the task of the business application software.

### Brief Description of the Drawings

The invention will now be described, by way of example, with reference to the accompanying drawings in which:
Fig. 1 is a diagrammatic illustration showing a prior art arrangement employing an SQL interface;
Fig. 1A is a diagrammatic illustration showing a prior art legacy database arrangement employing a proprietary database interface;
Fig. 2 is a diagrammatic illustration, similar to Fig. 1, showing a first embodiment of the present invention;
Fig. 3 is a diagrammatic illustration showing the internal programs comprising the business application SQL interface according to the present invention;
Fig. 4 is a diagrammatic illustration showing operation of the meta information loader of Fig. 3;
Fig. 5 is a diagrammatic illustration showing operation of the SQL interface engine, of Fig. 3, to facilitate execution of a desired SQL statement;
Fig. 6 is a diagrammatic illustration showing an algebraic tree, generated by the parser, with nodes which correspond to each table to be accessed;
Fig. 7 is a diagrammatic illustration showing an algebraic tree, generated by the optimizer, with nodes which correspond to the business transactions to be executed;
Fig. 8 is a flow diagram outlining the steps for creating the meta information according to the present invention;

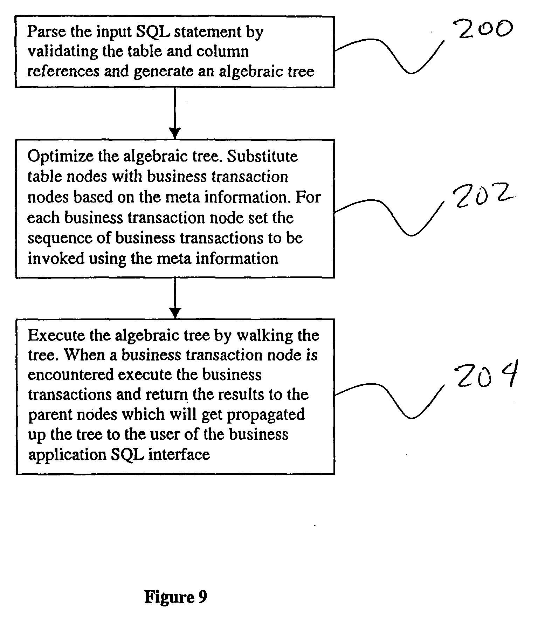

Fig. 9 is a flow diagram outlining the steps for executing the SQL statement according to the present invention;
Fig. 10 is a diagrammatic illustration showing operation of the present invention with an ODBC/JDBC/OLE DB application;
Fig. 11 is a diagrammatic illustration showing use of the present invention to interface with a packaged application;
Fig. 12 is a diagrammatic illustration showing use of the present invention to invoke business transactions across a network;
Fig. 13 is a diagrammatic illustration showing use of the present invention on applications implemented using object technologies such as Cobra, DCOM and EJB;
Fig. 14 is a diagrammatic illustration showing a further embodiment of the present invention for Internet applications using XML based business transactions; and
Fig. 15 is a diagrammatic illustration showing a still further embodiment of the present invention for main frame legacy applications using a screen scraper for interaction with the business transactions.

### Description of the Preferred Embodiments

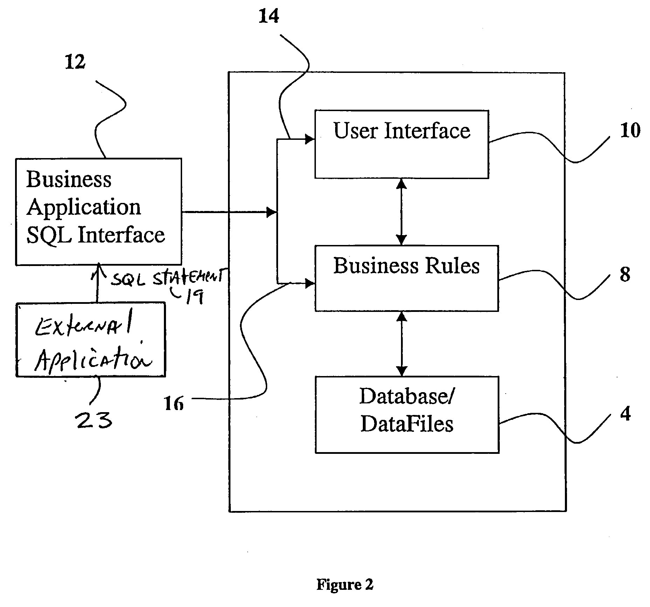

Turning now to Fig. 2, a detailed description concerning the system interface of the present invention will now be provided. As can be seen in this Figure, the business application software 2 is identical to that discussed with reference to Fig. 1. Accordingly, a further detailed description concerning the same is not provided.

In order to employ the business application SQL interface of the present invention, the business application SQL interface 12 has a first interface 14 which is directly coupled to the user interface 10 of the business application software 2. A second interface connection 16 couples the business application SQL interface 12 to the business logic rules 8 of the business application software 2. An external application 23 will input a desired query, question, request, instruction, etc., hereinafter referred to as a "SQL statement" 19, to the business application SQL interface 12. The business application SQL interface 12 will then, employing either the user interface 10 or the business logic rules 8, or both, depending upon the operation of the business application software 2, activate or call the necessary procedure(s) or call(s) so that the desired request or command can be completed by the business application software 2 via the business application SQL interface 12.

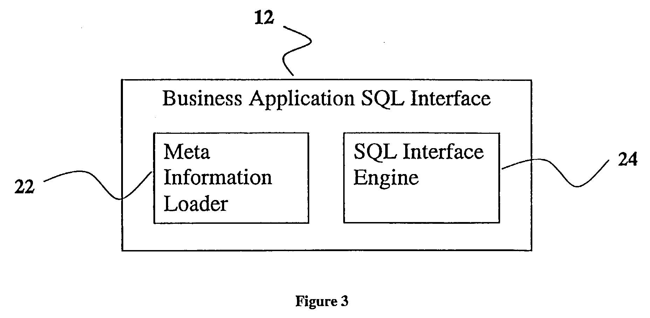

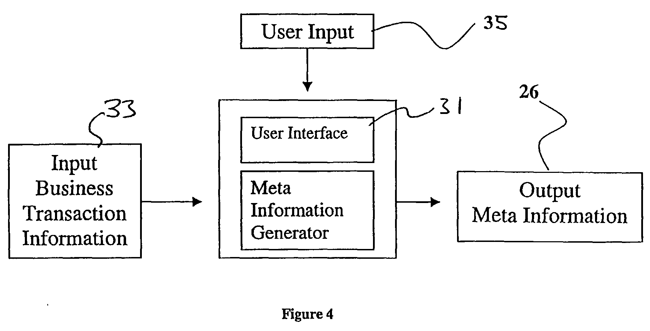

As can be seen in Fig. 3, the business application SQL interface 12, according to the present invention, comprises two primary software modules, namely, a meta information loader 22 and a SQL interface engine 24. The meta information loader 22 is an internal program having a user interface 31 (see Fig. 4) that facilitates loading all of the desired or necessary meta information 26 which is to be associated with translating the desired SQL statment(s) 19 to the business transaction(s). The meta information 26, generated by the meta information loader 22, is then utilized by the SQL interface engine 24 to translate a specific SQL statement to one or more business transactions that were originally incorporated into the business application software 2. A further detailed description concerning the manner of operation of the same will follow below.

As can be seen in Fig. 4, the meta information loader 22 receives, as inputs 33 from the user the necessary description of the business transactions of the business application software 2. By requesting additional user inputs 35 from the end user, the meta information loader 22 semi-automates the process of creating the meta information 26 required to translate the desired SQL statement(s) into a corresponding business transaction(s). Once this process is completed, the meta information 26 is then stored by the business application SQL interface 12, in a storage device, for later use by the SQL interface engine 24.

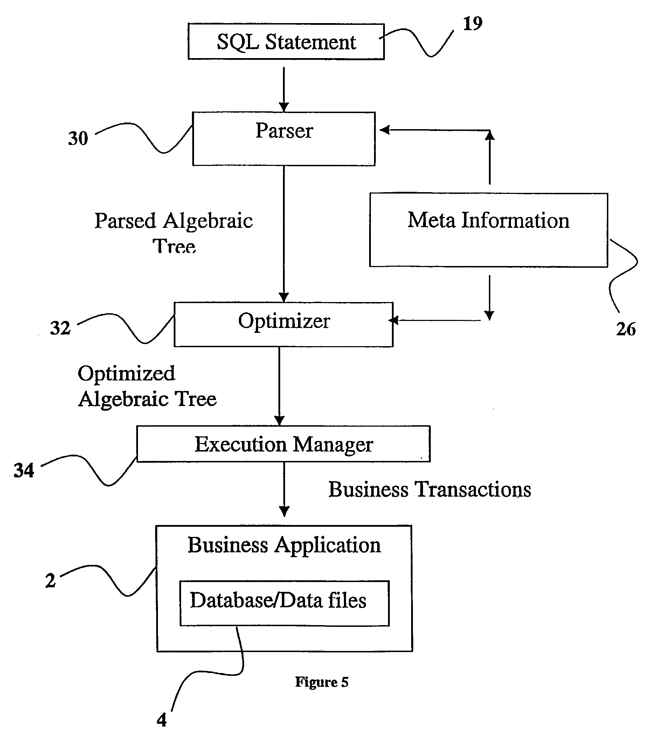

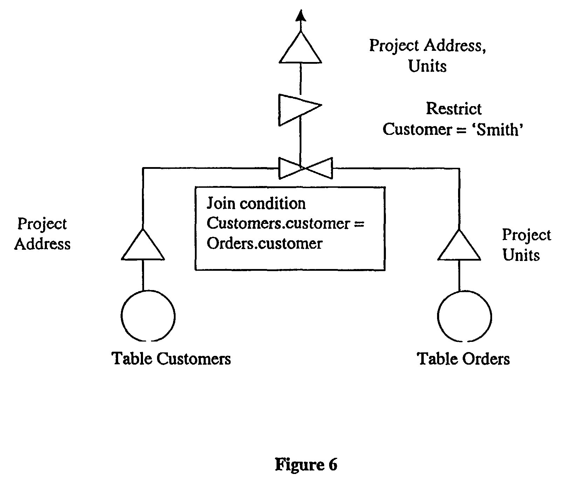

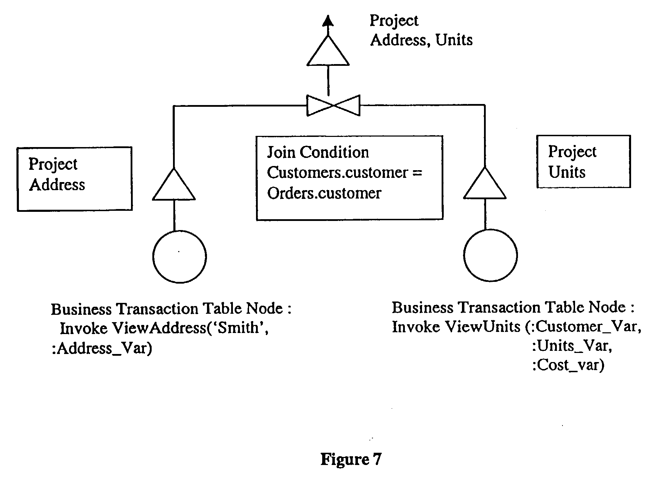

With reference to Fig. 5, the various process steps completed by the SQL interface engine 24 are shown. As shown in this Figure, the SQL interface engine 24 generally comprises a parser 30, an optimizer 32, and an execution manager 34. The parser 30 parses the SQL statement based on the meta information 26 created by the meta information loader 22. The parser 30 then generates a parsed algebraic tree with nodes which corresponds to each table to be accessed (see Fig. 6). The optimizer 32, using previously generated meta information 26, decides on the sequence of business transaction(s) that are to be made and creates, an optimized algebraic tree output (see Fig. 7). Finally, the execution manager walks the optimized algebraic tree (see Fig. 7) and executes the necessary business transactions and then returns the results of the execution of the appropriate business transactions of the business application software 2, to the ODBC/JDBC/OLE DB (Open DataBase Connectivity/Java DataBase Connectivity/Object Linking and Embedding DataBase Interface) external application 23 thereby completing execution of the desired SQL statement 19.

To assist with a further explanation of the present invention, the following example is provided for interfacing with a typical business application software. The business application SQL interface 12, as noted above, generally takes an input SQL statement 19 and translates (e.g. maps) that SQL statement to call the necessary business transaction(s) that are originally supported by the business application software 2. For example, the business application software 2 may provide the following business transactions in order to keep track of the "customers" and their respective "orders". Each business transaction has an associated name and a set of inputs or outputs that also have corresponding names. The following is an example of the business transactions for a typical business application software:
AddCustomer(IN Customer Name, IN Address);
DropCustomer(IN Customer Name);
ViewAddress(IN Customer Name, OUT Address);
ModifyAddress(IN Customer Name, IN New Address);
AddOrder(IN Customer Name, IN Units, IN Cost);
DropOrder(IN Customer Name);
ModifyUnits(IN Customer Name, IN Units, IN Cost); and
ViewUnits(IN Customer Name, OUT Units, OUT Cost).
Once the above information is known, the meta information loading process can commence. The following procedure generally describes the process for loading the necessary meta information 26 in accordance with the teaching of the present invention.

### META INFORMATION LOADING

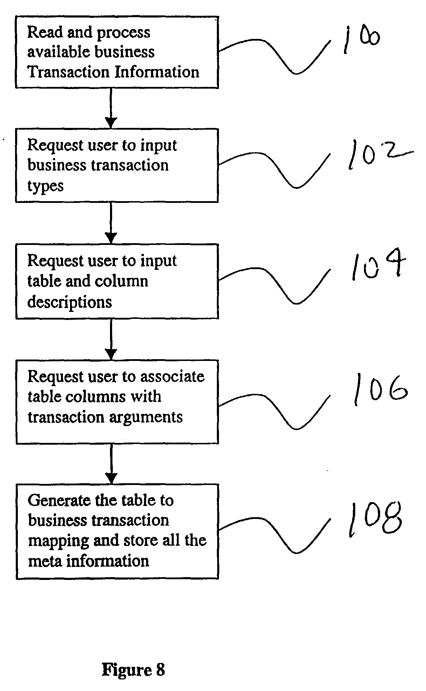

At step 100 of Fig. 8, the meta information loader 22 takes, as inputs into the business application SQL interface 12, the description of the business transactions as defined above in a number of formats that closely resemble the language that the application transactions are written. This inputted information is then visually displayed and stored in the business application SQL interface 12 to facilitate requesting further information about the business transaction(s) of the business application software 2. Generally, this information is stored in a format similar to that listed in Table 1 below.

**Table 1**

| Transaction Name | Argument Name | Argument Type |
|---|---|---|
| AddCustomer | Customer Name | IN |
| | Address | IN |
| DropCustomer | Customer Name | IN |
| ViewAddress | Customer Name | IN |
| | Address | OUT |
| ModifyAddress | Customer Name | IN |
| | New Address | IN |
| AddOrder | Customer Name | IN |
| | Units | IN |
| | Cost | IN |
| DropOrder | Customer Name | IN |
| ModifyUnits | Customer Name | IN |
| | Units | IN |
| | Cost | IN |
| ViewUnits | Customer Name | IN |
| | Units | OUT |
| | Cost | OUT |

For the sake of simplicity, the data types of the argument types are not shown with respect to the above representative meta information 26.

Once loading of the necessary inputs has occurred by the end user, the business application SQL interface 12 then requests, from the end user, at step 102, the type of the business transaction provided by the business application software, e.g. "select", "update", "delete", or "insert", and stores this transaction type in the business application SQL interface 12. Once this step is completed, each one of the desired transactions then has an inputted transaction type associated with it. Accordingly, the meta information 26 relating to the transaction type for each transaction name will be set up as shown in Table 2 below.

**Table 2**

| Transaction Name | Transaction Type |
|---|---|
| AddCustomer | INSERT |
| DropCustomer | DELETE |
| ViewAddress | SELECT |
| ModifyAddress | UPDATE |
| AddOrder | INSERT |
| DropOrder | DELETE |
| ModifyUnits | UPDATE |
| ViewUnits | SELECT |

Next, the business application SQL interface 12 then prompts the end user to enter, at step 104, the table name(s) that will be mapped to the application business transaction(s) of the business application software 2. The end user, at step 106, enters the desired table name(s) and which one of the arguments of the different business transactions is mapped to the table columns. At step 108, the table to business transaction mapping information is generated in a semi-automatic fashion from both the end user inputs and the previously loaded meta information 26. This process is generally simplified through the use of an interactive graphical user interlace. Upon completion of this mapping process, the meta information 26 (which comprises the meta SQL information and meta mapping information) is displayed and stored, at step 108, by the business application SQL interface 12.

The end user, according to the above example, selects two table names, e.g. "Customers" and "Orders", and also selects the appropriate arguments of the business transaction(s) to be mapped to the columns of the entered table. For the sake of simplicity, the names of the arguments and the names of the columns in Table 3 are assumed to be the same.

**Table 3**

| Table Name | Column Name | Column Type |
|---|---|---|
| Customers | Customer Name | Char(100) |
| | Address | Char(100) |
| Orders | Customer Name | Char(100) |
| | Units | Integer |
| | Cost | Money |

The meta mapping information, between the table columns and the business transaction arguments, is shown in Table 4. This mapping is inputted by the end user via use of the graphical user interface to click on the columns and the corresponding arguments to shown their relationships with one another. According to the following table, the column "Customer Name" maps to four arguments of four transactions, namely, AddCustomer, DropCustomer, ViewAddress, and ModifyAddress.

**Table 4**

| SQL Table Name | SQL Column Name | Transaction Name | Argument Name |
|---|---|---|---|
| Customers | Customer Name | AddCustomer | Customer Name |
| | | DropCustomer | Customer Name |
| | | ViewAddress | Customer Name |
| | | ModifyAddress | Customer Name |
| | Address | AddCustomer | Address |
| | | DropCustomer | Address |
| | | ViewAddress | Address |
| | | ModifyAddress | Address |
| Orders | Customer Name | AddOrder | Customer Name |
| | | DropOrder | Customer Name |
| | | ViewUnits | Customer Name |
| | | ModifyUnits | Customer Name |
| | Units | AddOrder | Units |
| | | DropOrder | Units |
| | | ViewUnits | Units |
| | | ModifyUnits | Units |
| | Cost | AddOrder | Cost |
| | | ViewUnit | Cost |
| | | ModifyUnits | Cost |

Using the information obtained from the previous steps, the business application SQL interface 12 then determines the mapping arrangement between the table and the desired set of business transactions of the business application software 2. Any column/argument mapping found in a business transaction typically indicates that the business transaction can be used for executing SQL statements to that table. According to the above example, the table "customer" maps to four available transactions, namely, "AddCustomer", "DropCustomer", "ViewAddress", and "ModifyAddress".

**Table 5**

| SQL Table | Transaction Name | Transaction Type |
|---|---|---|
| Customers | AddCustomer | INSERT |
| | DropCustomer | DELETE |
| | ViewAddress | SELECT |
| | ModifyAddress | UPDATE |
| Orders | AddOrder | INSERT |
| | DropOrder | DELETE |
| | ModifyUnits | UPDATE |
| | ViewUnits | SELECT |

All of the above inputted and generated information is then stored for later use by the SQL interface engine 24. Once the above steps are completed, the meta information 26 is then available for utilization by the business application SQL interface 12 during subsequent processing.

### SQL PROCESSING

Once the meta information 26 is available, the business application SQL interface 12 can then utilize the meta information 26 to execute a desired a SQL statement. For the sake of simplicity, the following example is provided to demonstrate the steps required, by the business application SQL interface 12, to execute a typical SQL statement utilizing the business transaction(s) incorporated within the business application software 2. First, step is for the end user to input a desired SQL statement such as:
"select address, units from Customers, Orders where customer="Smith" and Customers.customer=Orders.customer".
The above SQL statement is parsed, by the parser 30 of the business application SQL interface 12, into a usable format at step 200. From the meta information 26, the parser 30 recognizes that there are two valid tables (e.g. the customers table and the orders table) and two column values that are required (i.e. the values in the address column and the units columns). The parser 30 then coverts the SQL statement into a parsed algebraic tree with nodes corresponding to the tables and the references for the columns (see Fig. 6), thereby completing step 200.

The next step 202 is to employ the optimizer 32, using the meta information 26, to identify the table that is mapped to the desired business transaction(s) of the business application software. The tables, that are mapped to the desired business transactions, are identified as the business transaction tables. The optimizer 32 identifies the specific business transaction(s) that is/are to be invoked in order to retrieve the desired data or other information for execution of the SQL statement entered by the end user. The business transaction information will typically be entered into the business transaction table nodes of the optimized algebraic tree (see Fig. 7, for example), although other conventional and well known data structures can be utilized as will be apparent to those skilled in this art. As one example, the following will be identified by the meta information 26 as the business transaction(s) to be invoked or called:
Table Customers: Transaction ViewAddress
Table Orders: Transaction ViewUnits,
thereby completing step 202.

Next, the execution manager 34 invokes, at step 204, the business application program to operate in the following order:
Invoke ViewAddress('Smith',:Address_Var); and
Invoke ViewUnits('Smith',:Units_Var,:Cost_Var), for example,
and retrieves the results of the invocation of the procedural calls incorporated within the business application software 2. The resulting data or other information, from the business transactions of the business application software 2, is merged in accordance with the optimized algebraic tree (see Fig. 7) and the final results of the SQL statement are sent back to the external application 23 communicating with the business application SQL interface 12. The above procedure completes the processing of the entered SQL statement and the business application SQL interface 12, according to the present invention, is then ready to process any subsequent desired SQL statement(s) from the external application 23 by repeating the above processing steps starting from step 200.

The business application software, used in conjunction with the SQL interface, can be packaged applications sold by software vendors or custom applications developed for specific usage. Conventionally, access to the business application is provided via business transactions that are available through screens displayed on a conventional computer monitor or other display device, application programmatic interface(s), object interface(s), message interface(s) or XML request(s).

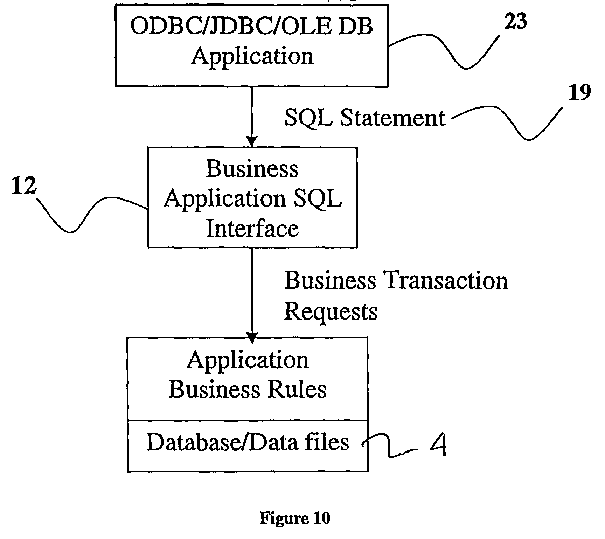

A second embodiment of the present invention, shown in Fig. 10, involves a SQL interface translating general SQL statement (including SQL joins, a other set operations like unions, minus and intersects) from an ODBC/JDBC/OLEDB application 23 into one or more business transaction(s) that are supported by the particular business application software. The data values, that are inputs for the SQL statement 19, are passed as inputs to the business transactions. The data values, that are outputs of the business transactions, are returned as the data output to the SQL statement. The business application SQL interface 12 translates the SQL statement to invoke the required application business rules, of the business application software 2, and does not directly interface to the data stored in the database 4 or data files that the business application software 2 uses for storing the data. This prevents losing the integrity of the business application software as the requests do not bypass the business rules that interpret or make sense of the data that is stored in the database 4 or data files. This ensures preservation of the integrity of the data.

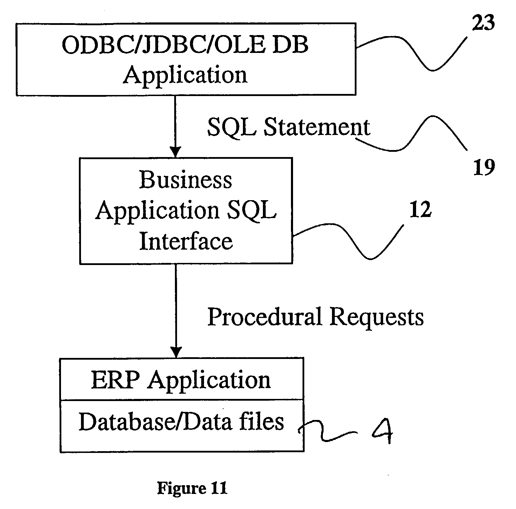

A third embodiment of the invention, as shown in Fig. 11, involves interfacing to a packaged application(s). Packaged applications, such as an ERP (Enterprise Resource Planning) application, typically provide an API (Application Programmatic Interface) to the business transactions supported by the application. The present invention can invoke the business transactions by invoking the API and passing the necessary input arguments and retrieving the output arguments. The API may be defined in any programmatic language such as C, C++, Java, COBOL, etc. The business application SQL interface 12 does not directly access the data stored in the ERP application but makes the requests through the business rules implemented by the packaged application.

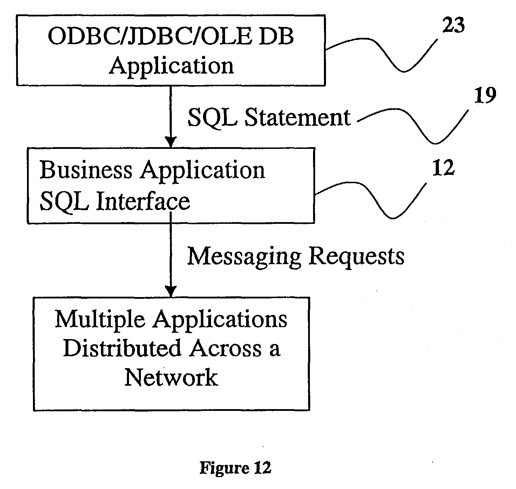

A fourth embodiment of the invention, shown in Fig. 12, provides for interfacing to distributed applications. In order to invoke the desired business transactions when multiple applications are involved, the business application SQL interface 12 can send business transaction(s) through messages, such as those implemented through MQ-series or other messaging and broadcast protocols. The actual nature of invoking the business transaction(s) is different but the process of translating SQL statement to business transaction(s) is the same. The additional benefit of using messaging is that the business application SQL interface 12 can be used to invoke business transaction(s) of multiple applications on a plurality of dissimilar computer equipment. As such messaging feature would be apparent to one skilled in the art, a further detail description concerning the same is not provided.

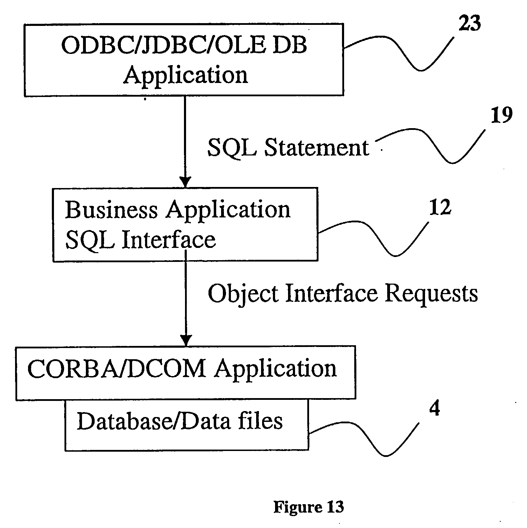

A fifth embodiment of the present invention, shown in Fig. 13, allows for interfacing to object based applications. For business applications that are implemented using object technologies, like CORBA, DCOM or EJB, the business rules are encapsulated in the objects. The business application SQL interface 12, comprising the present invention, invokes the business transactions by invoking the object interfaces.

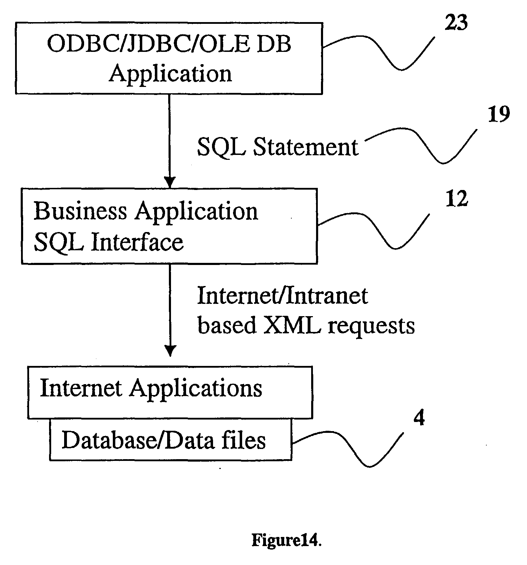

A sixth embodiment of the present invention, shown in Fig. 14, relates to interfacing to Internet applications. The business application SQL interface 12 can execute the desired SQL statement(s) 19 on the Internet application(s) within and outside an organization by sending XML based business transaction requests and awaiting the response. The Internet application can be from one or more organizations and, thus, the business application SQL interface 12 provides a way of executing an SQL statement on multiple applications that can be reached over the Internet through conventional XML based business transaction requests.

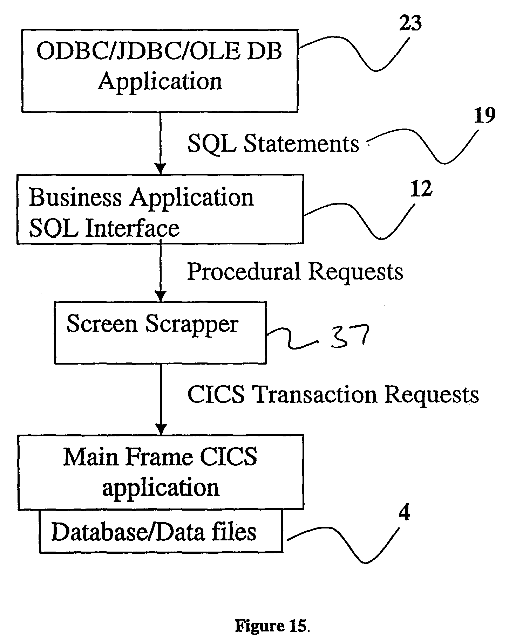

A seventh embodiment of the present invention, shown in Fig. 15, provides for interfacing to conventional legacy applications. To interface with a legacy application in which a user is not comfortable making modifications to the applications, the business application SQL interface 12 can use conventional screen scrapper technology. Screen scrapper 37 essentially provides a procedural way for invoking the business transactions that are typically run on block oriented terminals such as an IBM 3270 terminal. By invoking the screen scrapper technology, the business application SQL interface 12 can invoke any of the mainframe based business transactions without requiring any changes to the legacy application.

Since certain changes may be made in the above described SQL interface and process, without departing from the spirit and scope of the invention herein involved, it is intended that all of the subject matter of the above description or shown in the accompanying drawings shall be interpreted merely as examples illustrating the inventive concept herein and shall not be construed as limiting the invention.

## Claims

1. A business application SQL interface for use with at least one business transaction of a business application software, the business application SQL interface comprising:
a meta information loader for loading information relating to business transactions of a business application software;
means for defining tables and columns for use by an external application in referring to the business application software;
means for generating mapping rules associating the tables and the columns with at least one of the business transactions of the business application software;
means for accepting an inputted SQL statement referring to the defined tables and the columns; and
means for executing the inputted SQL statement by execution of at least one of the business transactions of the business application software.

2. The business application SQL interface according to claim 1, wherein the meta information loader further comprises:
means for inheriting, for each business transaction, (1) a name of the business transaction, (2) an argument name, (3) an input type and an output type for each argument name, and (4) a data type of each argument name; and
means for assigning, for each business transaction, one of an insert operation type, a delete operation type, an update operation type, and a select operation type.

3. The business application SQL interface according to claim 1, wherein the means for defining the tables and the columns further comprise means for providing a table name, a column name for each table, and a column type for each column.

4. The business application SQL interface according to claim 1, wherein the means for generating mapping rules further comprise:
means for inheriting, for each business transaction, (1) a name of the business transaction, (2) an argument name, (3) an input type and an output type for each argument name, and (4) a data type of each argument name;
means for assigning, for each business transaction, one of an insert operation type, a delete operation type, an update operation type, and a select operation type;
the means for defining the tables and columns further comprise means for defining a table name, a column name for each table, and a column type for each column; and
means for generating, for each table, a set of business transaction names that are to correspond to each defined table.

5. The business application SQL interface according to claim 1, wherein the inputted SQL statement is inputted by one of an Open DataBase Connectivity interface, a Java DataBase Connectivity interface or an Object Linking and Embedding DataBase interface.

6. The business application SQL interface according to claim 1, wherein the inputted SQL statement can perform SQL joins or other set operations between multiple previously defined tables.

7. The business application SQL interface according to claim 1, wherein the inputted SQL statement includes one of an insert operation type, a delete operation type, an update operation type, and a select operation type that refers to the defined tables.

8. The business application SQL interface according to claim 1, wherein the means for executing the inputted SQL statement further comprises means for passing inputs of the inputted SQL statement as inputs to the business transactions of the business application software;
means for executing desired mapped business transactions that correspond to the tables in the inputted SQL statement and a sequence in which the business transactions are to be invoked; and
means for passing the outputs of the business transactions as an output of the inputted SQL statement.

9. The business application SQL interface according to claim 1, wherein the means for executing the inputted SQL statement by execution of at least one of the business transactions of the business application software further comprises means for calling one of an application programmatic interface, an object interface, a messaging request, a screen scrapper request and a XML request.

10. A process for mapping an inputted SQL statement to at least one business transaction incorporated within business application software, the process comprising the steps:
loading meta information relating to business transactions of a business application software;
defining tables and columns for use by an external application in referring to the business application software;
generating mapping rules associating the defined tables and the columns with at least one of the business transactions of the business application software;
inputting a SQL statement that refers to the defined tables and the columns; and
executing the inputted SQL statement by execution of at least one of the business transactions of the business application software.

11. The process according to claim 10, wherein the step of loading meta information further comprises the steps of:
inheriting, for each business transaction, (1) a name of the business transaction, (2) an argument name, (3) an input type and an output type for each argument name, and (4) a data type of each argument name; and
assigning, for each business transaction, one of an insert operation type, a delete operation type, an update operation type, and a select operation type.

12. The process according to claim 10, wherein the step of defining the tables and the columns further comprises the step of:
defining a table name, a column name for each table, and a column type for each column.

13. The process according to claim 10, wherein the step of generating mapping rules further comprises the steps of:
inheriting, for each business transaction, (1) a name of the business transaction, (2) an argument name, (3) an input type and an output type for each argument name, and (4) a data type of each argument name;
assigning, for each business transaction, one of an insert operation type, a delete operation type, an update operation type, and a select operation type;
defining, for each table, a table name, a column name for each table, and a column type; and
inputting mapping information relating the columns of the tables to the argument names of the business transactions; and
generating, for each table, a set of business transaction names that correspond to each said defined table.

14. The process according to claim 10, wherein the step of inputting the SQL statement further comprises the step of:
inputting the SQL statement via one of an Open DataBase Connectivity interface, a Java DataBase Connectivity interface or an Object Linking and Embedding DataBase interface.

15. The process according to claim 10, wherein the step of inputting the SQL statement further comprises the step of:
inputting a general SQL statement performing SQL joins or other set operations between multiple previously defined tables.

16. The process according to claim 10, wherein the step of inputting the SQL statement further comprises the step of:
inputting a general SQL statement that is one of an insert operation type, a delete operation type, an update operation type, and a select operation type that refers to the tables.

17. The process according to claim 10, wherein the step of executing the inputted SQL statement further comprises the steps of:
passing inputs of the inputted SQL statement as inputs to the business transactions of the business application software;
executing desired mapped business transactions that correspond to the tables in the inputted SQL statement and determining a sequence in which the business transactions are to be invoked; and
passing the outputs of the business transactions as an output of the inputted SQL statement.

18. The process according to claim 10, wherein the step of executing the inputted SQL statement by execution of at least one of the business transactions of the business application software further comprises the step of:
calling one of an application programmatic interface, an object interface, a messaging request, a screen scrapper request and a XML request.
